**Europäisches Patentamt**

**European Patent Office**

**Office européen des brevets**

(11) Veröffentlichungsnummer: **0 038 370**

**A1**

(12) # EUROPÄISCHE PATENTANMELDUNG

(21) Anmeldenummer: **80102099.1**

(22) Anmeldetag: **18.04.80**

(51) Int. Cl.³: **F 16 D 65/26**
**F 16 D 25/04**

(43) Veröffentlichungstag der Anmeldung:
**28.10.81 Patentblatt 81/43**

(84) Benannte Vertragsstaaten:
**DE FR GB IT**

(71) Anmelder: **Binder Magnete GmbH**
**Mönchweiler Strasse 1**
**D-7730 VS-Villingen(DE)**

(72) Erfinder: **Vogel, Walter**
**Prinz-Eugen-Strasse 3**
**D-7730 VS-Villingen(DE)**

(72) Erfinder: **Hauer, Rudolf**
**Obere Waldstrasse 4**
**D-7730 VS-Villingen(DE)**

(74) Vertreter: **Patentanwälte Dipl.-Ing. Westphal Dr. rer.**
**nat. Bernd Mussgnug Dr. rer.nat. Otto Buchner**
**Seb.-Kneipp-Strasse 14**
**D-7730 VS-Villingen(DE)**

(54) **Fluiddruckgeschaltete Scheibenkupplung oder Scheibenbremse.**

(57) Ein mit Druckfluid beaufschlagbarer Pneu (6) bewirkt die axiale Verschiebung des Druckteils (7). Der Pneu (6) dehnt sich unter Fluiddruck axial aus und nimmt ohne Fluiddruck elastisch seine Ausgangsgestalt an. Der Pneu (6) ist in einer ringförmigen Ausnehmung des Gehäuses (11) eng anliegend aufgenommen, so daß er sich nur in axialier Richtung ausdehnen kann. Es ist eine Ausbildung als fluiddruckgelüftete Bremse oder Kupplung oder als fluiddruckbetätigte Bremse oder Kupplung möglich.

Fig. 1

EP 0 038 370 A1

Binder Magnete GmbH
Mönchweiler Str. 1
D - 7730 VS-Villingen

Fluiddruckgeschaltete Scheibenkupplung oder Scheibenbremse

Die Erfindung betrifft eine fluiddruckgeschaltete Scheibenkupplung oder Scheibenbremse mit einem Gehäuse, mit wenigstens einer in dem Gehäuse drehfest gehaltenen Scheibe,
mit einem gegen das Gehäuse drehbaren Mitnehmer, mit
wenigstens einer auf dem Mitnehmer drehfest gehaltenen
Scheibe, wobei die Scheiben axial gegeneinander verschiebbar sind, und mit einem Druckteil zum axialen reibschlüssigen Aneinanderpressen der Scheiben, das durch Beaufschlagung mit einem Druckfluid axial verschiebbar ist.

Scheibenkupplungen oder Scheibenbremsen dieser Art können
als Einscheiben-Geräte ausgebildet sein, bei denen nur eine
mit dem Gehäuse verbundene Scheibe mit einer mit dem Mitnehmer verbundenen Scheibe in Eingriff kommt. In den meisten
Fälle sind diese Scheibenkupplungen oder Scheibenbremsen
jedoch als Lamellengeräte ausgebildet, bei welchen mehrere
mit dem Gehäuse drehfest verbundene Scheiben abwechselnd
zwischen eine entsprechende Zahl von mit dem Mitnehmer drehfest verbundene Scheiben eingreifen, so daß ein Lamellenpaket
gebildet wird.

Die Scheibenkupplungen oder Scheibenbremsen finden vor allem
im Fahrzeug- und Maschinenbau Anwendung. Beim Einsatz als
Bremse ist das Gehäuse maschinenfest angebaut und der Mitnehmer sitzt auf der Welle eines abzubremsenden Maschinenelements. Die Aufgabe der Scheibenbremse besteht im allgemeinen darin, die Nachlaufzeiten dieses Maschinenelements,
die bei einem freien Auslauf des Antriebs entstehen würden,
zu verkürzen und statische Lastmomente, die bei stillgesetztem
Antrieb auf das Maschinenelement wirken, zu kompensieren.
Beim Einsatz als Kupplung sitzt das Gehäuse auf einer Antriebswelle und der Mitnehmer auf einer Abtriebswelle. Die
Kupplung hat die Aufgabe, die Abtriebswelle sofort freizugeben oder kraftschlüssig zu verbinden.

Bei bekannten Scheibenkupplungen und Scheibenbremsen dieser
Art ist das Druckteil als axial verschiebbarer Kreiszylinder
ausgebildet, der mit dem Druckfluid beaufschlagt wird. Die
Kraft, die das als Kreiszylinder ausgebildete Druckteil aufbringt, ist von seiner effektiven Zylinderfläche und vom
Druck des Druckfluids abhängig. Da die Scheibenkupplung oder
Scheibenbremse eine koaxiale Bohrung zur Aufnahme einer Welle
aufweist, muß das kreiszylindrische Druckteil an seinem Innen-
und Außendurchmesser abgedichtet werden, um die Leckverluste
des Druckfluids in Grenzen zu halten. Die dazu verwendeten
Dichtringe bestehen in der Regel aus Elastomeren und sind
mit zunehmender Betriebsdauer Verschleiß und Alterung unterworfen. Um auch über längere Betriebszeiten die Leckverluste
des Druckfluids in Grenzen zu halten, müssen die Gleitflächen
der Dichtringe mit eng tolerierten Durchmessern und hoher
Oberflächengüte hergestellt werden. Dies bedeutet einen hohen
Fertigungsaufwand.

Die dennoch unvermeidlichen Leckverluste führen zu Energieverlusten und technischen Nachteilen in der Druckfluidversorgung der Gesamtanlage. Die Wartung der Dichtringe erfordert
einen hohen Zeitaufwand. Besonders schwerwiegend ist dieser
Nachteil, wenn die Scheibenkupplung oder Scheibenbremse in
Verbindung mit einem Zentralgetriebe montiert ist, so daß
das gesamte Getriebe zum Austausch der Dichtringe bei der
Wartung demontiert werden muß.

Schließlich ist es bei diesen Scheibenkupplungen und Scheibenbremsen aufgrund der Reibkräfte der Dichtringe notwendig,
Rückstellfedern vorzusehen, um ein restmomentfreies Lüften
der Kupplung oder Bremse zu gewährleisten.

Der Erfindung liegt die Aufgabe zugrunde, diese Nachteile zu
vermeiden und eine fluiddruckgeschaltete Scheibenkupplung
oder Scheibenbremse zu schaffen, deren Fertigungsaufwand
geringer ist, die keine Leckverluste des Druckfluids aufweist und die keinem Verschleiß unterworfen ist.

Diese Aufgabe wird bei einer fluiddruckgeschalteten Scheibenkupplung oder Scheibenbremse der eingangs genannten Gattung
erfindungsgemäß dadurch gelöst, daß zur Betätigung des Druckteils ein koaxial angeordneter ringförmiger Pneu vorgesehen
ist, der mit dem Druckfluid beaufschlagbar und bei Beaufschlagung gegen seine Eigenelastizität axial ausdehnbar ist
und der axial an dem Druckteil angreift.

Unter Pneu wird hierbei ein ringförmiger Schlauch oder eine
ringförmige schlauchartig abgeschlossene Membran aus einem
Material mit einer gewissen Elastizität verstanden, der bzw.
die mit einem pneumatischen oder hydraulischen Druckfluid
füllbar ist Vorteilhafte Ausführungsformen der Erfindung sind in den
Unteransprüchen angegeben.


Um die axiale Ausdehnung des Pneus bei Beaufschlagung mit
dem Druckfluid in effektiver Weise zu erhalten, weist der
Pneu im Querschnittsprofil vorzugsweise einen in Axialrichtung U-förmigen Profilteil auf, der festgelegt ist und sich
unter der Wirkung des Druckfluids nicht verformt. Dies wird
dadurch erreicht, daß der U-förmige Profilteil so in dem Gehäuse aufgenommen ist, daß er von diesem eng anliegend umfaßt
wird. Ebenso kann vorzugsweise auch zusätzlich der U-förmige
Profilteil durch eine Gewebeeinlage verformungsfest versteift
sein. Auf diese Weise ist unter der Wirkung des Druckfluids
nur der diesen U-förmigen Profilteil verschließende Profilteil elastisch verformbar. Wird eine Membran als Pneu verwendet, so bildet das Gehäuse den Boden des U-Profils und
nur die mit Schultern selbstdichtend im Gehäuse sitzenden
Seitenwände des Membran-Profils werden vom Gehäuse eng umfaßt. Um mit einer minimalen Beanspruchung des elastomeren
Materials des Pneus eine ausreichende axiale Ausdehnung und
damit einen ausreichenden Hub des Druckteils zu bewirken, ist
der den U-förmigen Profilteil abschließende Profilteil nach
innen gewölbt ausgebildet. Bei Beaufschlagung mit dem Druckfluid wird dieser Profilteil im wesentlichen nur nach außen
gestülpt, so daß ohne eine stärkere elastische Verformung des
Pneumaterials ein ausreichender axialer Hub erhalten wird.


Der erfindungsgemäß verwendete Pneu macht alle Abdichtungen
für das Druckfluid überflüssig. Dementsprechend treten keine
Leckverluste auf und die hohen Anforderungen an die Oberflächenbearbeitung der Dichtflächen entfallen, wodurch die
Herstellungskosten stark verringert werden. Ebenso entfällt

Verschleiß von Dichtungen, so daß die Kupplung bzw. Bremse
praktisch wartungsfrei ist. Schließlich nimmt der Pneu aufgrund seiner Eigenelastizität seine ursprüngliche Form von
selbst wieder ein, sobald der Fluiddruck nachläßt. Es sind
daher keine Rückstellfedern notwendig, um die Kupplung oder
Bremse zu lüften, so daß es auch möglich ist, eine Bremse
oder Kupplung nur mit der Fluiddruckbetätigung und ohne zusätzliche Druckfedern auszubilden.

Die Scheibenkupplung oder Scheibenbremse kann erfindungsgemäß sowohl fluiddruckbetätigt als auch fluiddruckgelüftet
ausgebildet werden. Bei einer fluiddruckgelüfteten Bremse
oder Kupplung werden die Scheiben unter Federdruck miteinander in Eingriff gebracht und mittels des Pneus gegen diesen Federdruck gelüftet. Bei einer fluiddruckbetätigten
Bremse oder Kupplung werden die Scheiben durch den Pneu in
reibschlüssigen Eingriff gebracht, während bei einer Druckentlastung des Pneus dieser in seine ursprüngliche Gestalt
zurückgeht, so daß zusätzliche Druckfedern zum Lüften nicht
erforderlich sind, wie bereits oben erwähnt.

Im folgenden wird die Erfindung anhand von in der Zeichnung
dargestellten Ausführungsbeispielen näher erläutert. Es
zeigen:

Fig. 1 : eine fluiddruckgelüftete Bremse gemäß der Erfindung
im Axialschnitt, wobei die Bremse in der oberen
Hälfte im gelüfteten Zustand und in der unteren
Hälfte im wirksamen Zustand gezeigt ist,

Fig. 2: eine fluiddruckbetätigte Kupplung gemäß der Erfindung im Axialschnitt, wobei in der oberen Hälfte
die Kupplung im wirksamen Zustand und in der unteren Hälfte im gelüfteten Zustand gezeigt ist, und

Fig. 3: eine abgewandelte Ausführung, bei der der Pneu
als Membran ausgebildet ist.

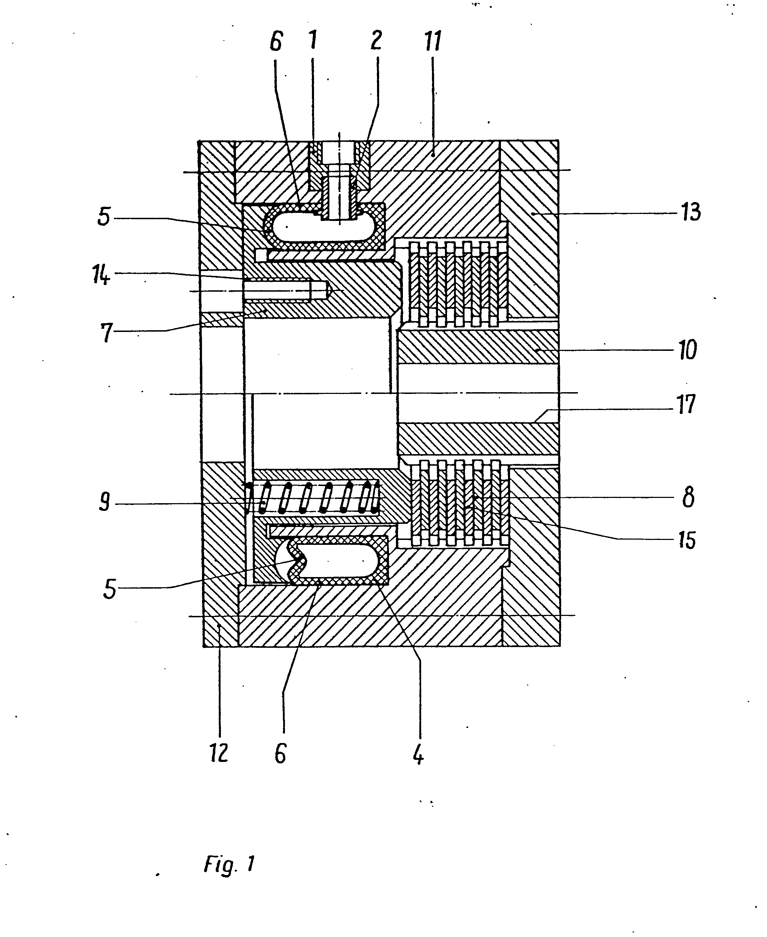

Die in Fig. 1 dargestellte fluiddruckgelüftete Bremse weist
ein zylindrisches Gehäuse 11 auf, das mittels eines Anbauflansches 12 fest an einer Maschine montiert ist. In dem Gehäuse 11 ist eine ringförmige axiale Ausnehmung vorgesehen,
die gegen den Anbauflansch 12 hin offen ist. In diese Ausnehmung ist ein ringförmiger Pneu 6 eingesetzt, der über
einen Fluideinlaß 2 mit einem Druckfluid beaufschlagbar ist.
Der Fluideinlaß 2 durchsetzt eine radial nach außen gerichtete Bohrung des Gehäuses 11 und ist mit einem in das Gehäuse 11 eingesetzten Anschlußgewindeteil 1 für den Anschluß
einer Druckfluidleitung versehen.

Der Pneu 6 besteht aus einem elastomeren Material und weist
ein in Axialrichtung langgestrecktes Querschnittsprofil auf.
Der in Axialrichtung langgestreckte Profilteil 4 des Pneus 6
sitzt vollständig in der Ausnehmung des Gehäuses 11 und wird
dadurch von dem Gehäuse 11 allseitig dicht anliegend umfaßt.
Eine Ausdehnung und Verformung des U-förmigen Profilteils 4
ist daher bei Beaufschlagung des Pneus 6 mit Druckfluid
nicht möglich. Der U-förmige Profilteil 4 kann zusätzlich
durch eine Gewebeeinlage verstärkt und dadurch verformungsfest sein.

An der dem Anbauflansch 12 zugewandten Seite ist der U-förmige Profilteil 4 des Pneus 6 durch ein Profilteil 5 abgeschlossen. Der Profilteil 5 ist nach innen gewölbt und ragt
in den lichten Querschnitt des Pneus hinein, wie in der
unteren Hälfte der Fig. 1 gezeigt ist.

Wird der Pneu 6 mit Druckfluid beaufschlagt, so wird der
Profilteil 5 nach außen gedrückt, wie in der oberen Hälfte
der Fig. 1 gezeigt ist. Diese Verformung des Pneus 6 ist
möglich, da der Pneu 6 im Bereich des Profilteils 5 nicht
vom Gehäuse umfaßt ist und der Profilteil 5 auch keine versteifende Gewebeeinlage enthält. Das Auswölben des Profilteils 5 führt zu einer axialen Ausdehnung des Pneus 6.

In dem Gehäuse 11 sitzt koaxial drehbar ein Mitnehmer 10,
in dessen koaxiale Innenbohrung 17 eine nicht dargestellte
Welle eines abzubremsenden Maschinenelements eingepaßt ist.
Auf dem Außenumfang des Mitnehmers 10 sitzen in axialen
Schiebenuten drehfest und axial verschiebbar als Lamellenscheiben ausgebildete Scheiben 8. Zwischen diese Scheiben
8 greifen ebenfalls als Lamellenscheiben ausgebildete Scheiben 15, die in axialen Schiebenuten drehfest und axial verschiebbar im Gehäuse 11 gelagert sind. Die Scheiben 8 und
15 bilden in bekannter Weise ein Lamellenpaket.

In dem Gehäuse 11 ist weiter ein Druckteil 7 axial verschiebbar gelagert. Das Druckteil 7 weist einen koaxial im Inneren
des Gehäuses 11 angeordneten zylindrischen Abschnit auf,
dessen Stirnfläche den Scheiben 8 und 15 des Lamellenpaketes
zugewandt ist. Am entgegengesetzten Ende weist das Druckteil
7 einen radial nach außen gerichteten Flansch auf, der sich
dem Profilteil 5 des Pneus 6 gegenüber befindet. Der Flansch
springt axial in die den Pneu 6 aufnehmende Ausnehmung vor
und weist eine dem Pneu 6 zugewandte ringförmige Rinne auf.

In diese Rinne legt sich der Profilteil 5, wenn er unter Fluiddruck ausgewölbt wird. Dadurch ist der unter Fluiddruck stehende Pneu 6 allseitig abgestützt, so daß problemlos hohe Fluiddrücke angewendet werden können.

Das Druckteil 7 weist über seinen Umfang verteilt, vorzugsweise drei axiale Sackbohrungen auf, die gegen den Anbauflansch 12 hin offen sind. In diese Sackbohrungen sind Druckfedern 9 eingesetzt, die sich an dem Anbauflansch 12 abstützen und das Druckteil 7 gegen die Scheiben 8 und 15 drücken. Eine am Gehäuse 11 befestigte Gegendruckplatte 13 stützt die Scheiben 8 und 15 axial gegen das Druckteil 7 ab.

Die in Fig. 1 dargestellte Scheibenbremse arbeitet in folgender Weise:

Wird der Pneu 6 nicht mit Druckfluid beaufschlagt, wie dies in der unteren Hälfte der Fig. 1 dargestellt ist, so nimmt er aufgrund der Elastizität seines Materials seine ursprüngliche Gestalt mit nach innen gewölbtem Profilteil 5 ein. Das Druckteil 7 wird durch die Druckfedern 9 gegen das Lamellenpaket der Scheiben 8 und 15 gedrückt und presst diese axial gegen die Gegendruckplatte 13. Die Scheiben 8 und 15 kommen auf diese Weise reibschlüssig in Eingriff und der Mitnehmer 10 und dadurch die in diesem sitzende Welle werden abgebremst.

Wird der Pneu 6 mit Druckfluid beaufschlagt, wie dies in
der oberen Hälfte der Fig. 1 dargestellt ist, so wird der
Profilteil 5 nach außen gestülpt und drückt gegen den Flansch
des Druckteils 7. Das Druckteil 7 wird dadurch axial gegen
die Kraft der Druckfedern 9 verschoben und von dem Lamellenpaket der Scheiben 8 und 15 abgehoben. Die Scheiben 8 und
15 werden nicht mehr axial gegeneinander gepreßt, so daß
ihr Reibschluß aufgehoben wird. Der Mitnehmer 10 wird dadurch frei drehbar.

Bei Bedarf kann eine Einrichtung zum manuellen Lüften der
Bremse an den Druckteil 7 angreifen, die den Anbauflansch
12 durchgreift und in einer Gewindebohrung 14 befestigt ist.

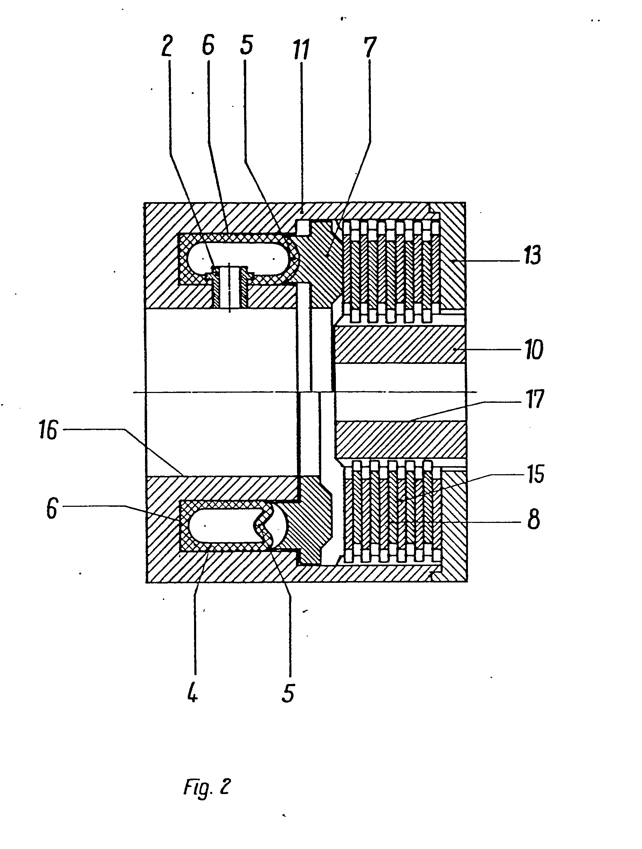

Fig. 2 zeigt eine fluiddruckbetätigte Kupplung.

Soweit einzelne Bauteile dieser Kupplung mit der in Fig. 1
dargestellten Bremse übereinstimmen, wird auf deren Beschreibung verwiesen. Insbesondere betrifft dies die Ausgestaltung
und Wirkungsweise des Pneus 6 und des Lamellenpakets der
Scheiben 8 und 15.

Da es sich bei dem Gerät der Fig. 2 um eine Kupplung und
nicht um eine Bremse handelt, ist das Gehäuse 11 nicht
maschinenfest montiert, sondern sitzt drehfest auf einer nicht
dargestellten Welle, die formschlüssig in eine Innenbohrung
16 des Gehäuses eingesetzt ist. Diese Welle ist mit einer
Innenbohrung versehen, die über einen radialen Kanal mit
dem Fluideinlaß 2 des Pneus 6 in Verbindung steht. Die Druckfluidzu- und -abführung des Pneus 6 erfolgt damit über diese
Welle.

Der Pneu 6 ist mit seinem U-förmigen Profilteil 4 in eine ringförmige axial ausgedehnte Ausnehmung des Gehäuses 11 eingesetzt, die gegen das Lamellenpaket der Scheiben 8 und 15 hin offen ist. Zwischen den axial verformbaren Profilteil 5 des Pneus 6 und das Lamellenpaket der Scheiben 8 und 15 ist das Druckteil 7 eingesetzt, das die Form einer Kreisringscheibe aufweist. Die Kreisringscheibe springt axial in die den Pneu 6 aufnehmende Ausnehmung des Gehäuses 11 vor und weist in diesem Vorsprung eine den Profilteil 5 im ausgewölbten Zustand abstützend aufnehmende Rinne auf.

In den übrigen Teilen stimmt die Kupplung der Fig. 2 mit der Bremse der Fig. 1 überein.

Die Kupplung der Fig. 2 arbeitet in folgender Weise:

Wird der Pneu 6 mit Druckfluid beaufschlagt, wie dies in der oberen Hälfte der Fig. 2 dargestellt ist, so wölbt sich der Profilteil 5 des Pneus 6 axial aus und preßt das Druckteil 7 axial gegen die Scheiben 8 und 15, die durch die Ge- gendruckplatte 13 abgestützt sind. Die Scheiben 8 und 15 kommen dadurch reibschlüssig in Eingriff und der Mitnehmer 10 dreht sich mit dem Gehäuse 11. Die in die Innenbohrung 16 des Gehäuses 11 eingesetzte Welle und die in die Innenbohrung 17 des Mitnehmers 10 eingesetzte Welle sind somit gekuppelt.

Wird der Pneu 6 nicht mit Druckfluid beaufschlagt, wie dies in Fig. 2 in der unteren Hälfte dargestellt ist, so nimmt er aufgrund seiner Eigenelastizität seine ursprüngliche Gestalt mit nach innen gewölbtem Profilteil 5 ein. Das Druckteil 7 wird nicht mehr gegen die Scheiben 8 und 15 gepreßt, so daß diese nicht mehr unter axialem Druck reibschlüssig in Eingriff sind. Der Mitnehmer 10 ist gegen das Gehäuse 11 frei drehbar und die Kupplung ist außer Eingriff. Da der Pneu 6 aufgrund seiner Eigenelastizität selbsttätig die in Fig. 2 in der unteren Hälfte dargestellte Gestalt annimmt, sind Rückstellfedern für ein restmomentfreies Lüften der Kupplung nicht notwendig.

In Fig. 1 ist eine fluiddruckgelüftete Bremse und in Fig. 2 eine fluiddruckbetätigte Kupplung dargestellt. Es ist ohne weiteres ersichtlich, daß in analoger Weise erfindungsgemäß auch eine fluiddruckbetätigte Bremse und eine fluiddruckgelüftete Kupplung aufgebaut sein können.

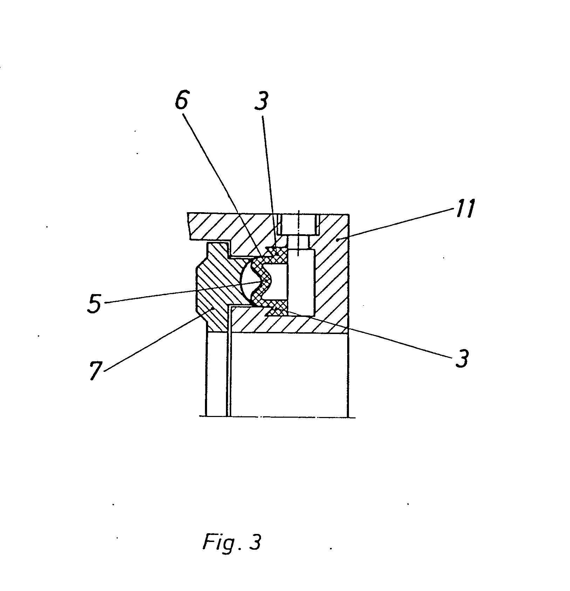

In Fig. 3 ist eine abgewandelte Ausführungsform des Pneus 6 dargestellt. Der ringförmige Pneu 6 ist in dieser Ausführungsform im Querschnitt nicht schlauchförmig geschlossen, sondern wird durch eine ringförmige Membran gebildet.

Dem U-förmigen Profilteil 4 der Ausführungsform der Fig. 1 und 2 entsprechen in der Ausführungsform der Fig. 3 die axialen Seitenwände der Membran, und der diese abschließende Grund der ringförmigen Ausnehmung des Gehäuses 11. Die axialen Seitenwände der Membran werden radial durch das Gehäuse 11 abgestützt. Die Membran stützt sich mit an ihren Rändern vorgesehenen äußeren Schultern 3 axial in entsprechend geformten Stufen des Gehäuese 11 ab, so daß die Seitenwände der Membran bei Druckbeaufschlagung axial festgelegt sind.

Die Schultern 3 bewirken gleichzeitig die Abdichtung
zwischen der den Pneu 6 bildenden Membran und dem Gehäuse 11. Dabei wird eine selbstdichtende Wirkung dadurch erzielt, daß der Fluiddruck die Schultern 3 verstärkt in die entsprechenden Stufen des Gehäuses 11 preßt.

Bei der Ausführungsform der Fig. 3 ist der Materialbedarf des Pneus 6 gegenüber den Ausführungsformen der
Fig. 1 und 2 erheblich reduziert. Es entfällt nicht nur
der Profilgrund des U-förmigen Profilteils der Ausführungsform der Fig. 1 und 2, es können die axialen Seitenwände
des Pneus außerdem auch kürzer ausgebildet werden, da das
erforderliche Volumen für das Druckfluid durch die Ausnehmung des Gehäuses 11 gebildet wird. Schließlich ist die
Fertigung des Pneus 6 gemäß Fig. 3 einfacher, da der Fluideinlaß 2 entfallen kann.

Da sich die Ausführungsform der Fig. 3 nur in der Gestaltung
des Pneus 6 von der Ausführungsform der Fig. 2 unterscheidet, sind die übrigen Teile der Kupplung nicht dargestellt.
Selbstverständlich kann der Pneu gemäß Fig. 3 bei allen
anhand der Fig. 1 und 2 erläuterten Varianten von Kupplungen
und Bremsen in gleicher Weise eingesetzt werden.

107

P a t e n t a n s p r ü c h e

1. Fluiddruckgeschaltete Scheibenkupplung oder Scheibenbremse mit einem Gehäuse (11), mit wenigstens einer
   in dem Gehäuse (11) drehfest gehaltenen Scheibe (15),
   mit einem gegen das Gehäuse (11) drehbaren Mitnehmer (10),
   mit wenigstens einer auf dem Mitnehmer (10) drehfest
   gehaltenen Scheibe (8), wobei die Scheiben (8 und 15)
   axial gegeneinander verschiebbar sind, und mit einem
   Druckteil (7) zum axialen reibschlüssigen Aneinanderpressen der Scheiben (8 und 15), das durch Beaufschlagung mit einem Druckfluid axial verschiebbar ist, dadurch gekennzeichnet, daß zur Betätigung des Druckteils
   (7) ein koaxial angeordneter ringförmiger Pneu (6) vorgesehen ist, der mit dem Druckfluid beaufschlagbar und
   bei Beaufschlagung gegen seine Eigenelastizität axial
   ausdehnbar ist und der axial an dem Druckteil (7) angreift.

2. Scheibenkupplung oder Scheibenbremse nach Anspruch 1, dadurch gekennzeichnet, daß das Querschnittsprofil des Pneus (6) aus einem in Axialrichtung U-förmigen festgelegten Profilteil (4) und einem diesen abschließenden, elastisch verformbaren Profilteil (5) besteht.

3. Scheibenkupplung oder Scheibenbremse nach Anspruch 1, dadurch gekennzeichnet, daß der Pneu (6) aus einer eine ringförmige Ausnehmung des Gehäuses (11) abschließenden Membran besteht, deren Ränder dichtend in dieser Ausnehmung in Axialrichtung festgelegt sind und die einen elastisch verformbaren Profilteil (5) aufweist.

4. Scheibenkupplung oder Scheibenbremse nach Anspruch 2 oder 3, dadurch gekennzeichnet, daß der Pneu (6) aus einem elastomeren Material besteht und sein U-förmiger Profilteil (4) bzw. die Ränder der Membran von dem Gehäuse (11) gegen eine Verformung festgelegt, eng anliegend aufgenommen ist.

5. Scheibenkupplung oder Scheibenbremse nach einem der Ansprüche 2-4, dadurch gekennzeichnet, daß der Pneu (6) aus einem elastomeren Material besteht und sein U-förmiger Profilteil (4) bzw. die Ränder der Membran durch eine Gewebeeinlage verformungsfest ist.

6. Scheibenkupplung oder Scheibenbremse nach einem der Ansprüche 2-5, dadurch gekennzeichnet, daß der elastisch verformbare Profilteil (5) nach innen gewölbt ist.

7. Scheibenkupplung oder Scheibenbremse nach einem der Ansprüche 1-6, dadurch gekennzeichnet, daß das Druckteil
(7) unter der Wirkung von Druckfedern (9) die Scheiben
(8 und 15) aneinanderpreßt und der Pneu (6) entgegengesetzt zur Kraft der Druckfedern (9) an dem Druckteil
(7) angreift.

8. Scheibenkupplung oder Scheibenbremse nach einem der Ansprüche 1-6, dadurch gekennzeichnet, daß der Pneu (6)
im axial ausgedehnten Zustand das Druckteil (7) gegen
die Scheiben (8 und 15) preßt.

9. Scheibenbremse nach einem der Ansprüche 1-8, dadurch gekennzeichnet, daß das den Pneu (6) und dessen Fluideinlaß (2) aufnehmende Gehäuse (11) feststehend ist.

10. Scheibenkupplung nach einem der Ansprüche 1-8, dadurch
gekennzeichnet, daß das den Pneu (6) und dessen Fluideinlaß (2) aufnehmende Gehäuse (11) drehfest auf einer der
zu kuppelnden Wellen sitzt, die zur Druckfluidzufuhr eine
mit dem Fluideinlaß (2) in Verbindung stehende Innenbohrung aufweist.

Fig. 1

Fig. 2

Fig. 3

Europäisches
Patentamt

**EUROPÄISCHER RECHERCHENBERICHT**

| \multicolumn{3}{c}{**EINSCHLÄGIGE DOKUMENTE**} | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | US - A - 3 435 936 (WARMAN)<br>* Spalte 3, Zeilen 46 bis 55; Fig. 1, 4, 9 *<br>-- | 1-4, 8,9 | F 16 D 65/26<br>F 16 D 25/04 |
| X | DE - A1 - 2 611 986 (PHOENIX GUMMIWERKE)<br>* ganzes Dokument *<br>-- | 1,6,8, 10 | |
|  | US - A - 1 816 076 (DOWN)<br>* Seite 1, Zeile 91 bis Seite 2, Zeile 10; Fig. 4, 5 *<br>-- | 5 | |
| X | MACHINE DESIGN, Band 51, Nr. 9, 1979 Cleveland<br>H.S. PETERSON et al. "Sure-Fire Stopping Power with Failsafe Brakes" Seiten 170 bis 175<br>* Seite 172, Kasten "Inside Spring-Set Brakes*<br>---- | 7 | **RECHERCHIERTE SACHGEBIETE (Int. Cl.3)**<br><br>F 16 D 25/00<br>F 16 D 65/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 11-12-1980 | LUDWIG |

EPA form 1503.1   06.78